# EUROPEAN PATENT SPECIFICATION

(11) **EP 0 894 950 B1**
(45) Date of publication and mention of the grant of the patent: **25.09.2002**
(21) Application number: 98114312.6
(22) Date of filing: 30.07.1998
(51) Int. Cl.: F01N 3/023, F01N 3/08, F02B 37/18, F01N 3/035

(54) **Exhaust emission control device and method for controlling an exhaust emission of an internal combustion engine**
Vorrichtung zur Abgasemissionssteuerung und Verfahren zum Steuern der Abgasemission einer Brennkraftmaschine
Dispositif de réglage des émissions d' échappement et procédé pour régler des émissions d' échappement d'un moteur à combustion interne

(30) Priority: 31.07.1997 JP 20686497
(43) Date of publication of application: 03.02.1999
(73) Proprietor: TOYOTA JIDOSHA KABUSHIKI KAISHA, Aichi-ken 471-8571 (JP)
(72) Inventor: Araki, Yasushi, Toyota-shi, Aichi-ken, 471-8571 (JP); Henda, Yoshimitu, Toyota-shi, Aichi-ken, 471-8571 (JP); Watanabe, Yoshimasa, Toyota-shi, Aichi-ken, 471-8571 (JP); Tanaka, Toshiaki, Toyota-shi, Aichi-ken, 471-8571 (JP); Hirota, Shinya, Toyota-shi, Aichi-ken, 471-8571 (JP)
(74) Representative: Pellmann, Hans-Bernd, Dipl.-Ing.

(56) References cited:
- EP-A- 0 743 429
- DE-A- 4 325 004
- US-A- 4 553 387
- PATENT ABSTRACTS OF JAPAN vol. 005, no. 065 (M-066), 30 April 1981 (1981-04-30) & JP 56 018016 A (NIPPON SOKEN INC), 20 February 1981 (1981-02-20)

## Description

The present invention relates to an exhaust emission control device for an internal combustion engine according to claim 1 and a method for controlling an exhaust emission of an internal combustion engine according to the preamble of claim 7. More specifically the invention relates to an exhaust emission control device that has a filter for trapping particulates disposed in an exhaust passage of an internal combustion engine and causes the trapped particulates to burn so that the filter is regenerated.

Exhaust gas discharged from a diesel engine contains a relatively large amount of fine particles (particulates) including carbon as a major constituent, which causes serious contamination of the environment. It is therefore desirable to inhibit the generation of such particulates in the engine or to remove the particulates prior to the discharge of the exhaust gas into the atmosphere. For this purpose, it is proposed that a filter for trapping particulates be disposed in an exhaust passage of a diesel engine.

In the case where a filter for trapping particulates is disposed in an exhaust passage of a diesel engine, if the amount of particulates trapped in the filter increases, there is caused an increase in a flow resistance against exhaust gas, which leads to a deterioration in engine performance. Thus, it is necessary to cause the particulates trapped in the filter to burn on the regular basis and to regenerate the filter.

For example, if the engine operates at such a high speed that the exhaust gas temperature exceeds about 600°C, it is possible to cause the particulates trapped in the filter to spontaneously burn. However, the engine does not operate in such a state on the regular basis. According to JP-A-56-18016, a filter carries an oxidation catalyst for causing fuel to burn on the regular basis, so that the combustion heat generated at this time causes particulates to burn.

The aforementioned related art requires additional fuel to be directly supplied to the oxidation catalyst. If the engine is used over a long period of time, an enormous amount of additional fuel is supplied to the oxidation catalyst.

EP-A-0 743 429 discloses a generic exhaust emission control device and method for an internal combustion engine. Particulates are trapped in a filter disposed in an engine exhaust passage. A hydrocarbon adsorbent is disposed upstream of the filter. The hydrocarbon adsorbent has the capability of adsorbing hydrocarbons when its temperature is low whereas hydrocarbons are discharged when its temperature is high. When the temperature rises, the hydrocarbons react on the oxidative catalyst and are not discharged to the filter.

US-A-4 553 387 discloses an exhaust emission control device and method, according to which particulates are trapped in a filter disposed in an engine exhaust passage. These particulates are burned by a risen temperature caused by using more fuel, by closing an air flap or recirculation flap or by opening an exhaust gas bypass valve.

It is thus an object of the present invention to provide an exhaust emission control device and a method for controlling an exhaust emission such that the amount of fuel to be supplied to a filter is reduced to cause particulates trapped in the filter to burn.

This object is solved by the features of the independent claims 1 and 7. The dependent claims disclose further advantageous embodiments of the invention.

An exhaust emission control device of the present invention comprises a filter disposed in an engine exhaust passage to trap particulates, a hydrocarbon adsorbent disposed upstream of the filter in the engine exhaust passage, exhaust gas flow resistance change means disposed downstream of the hydrocarbon adsorbent in the engine exhaust passage, and an operating means for operating the exhaust gas flow resistance change means to increase a flow resistance against exhaust gas before the filter should be regenerated to reduce the exhaust gas flow resistance during filter regeneration. Corresponding features are present in the method claim. Thus, the atmospheric pressure of the hydrocarbon adsorbent is enhanced throughout the engine operation and the difference in maximum adsorption amount for a certain temperature difference increases, whereby it is possible to discharge a large amount of hydrocarbon from the hydrocarbon adsorbent. As a result, it is possible to reduce the amount of fuel consumption required to cause particulates trapped in the filter to burn.

The exhaust emission control device of the present invention may be modified such that the exhaust gas flow resistance change means comprises a turbine of a turbocharger disposed downstream of the filter in the engine exhaust passage, a bypass passage for bypassing the turbine, and a control valve disposed in the bypass passage, and that the operating means closes the control valve. Thus, the exhaust energy exceeding the energy that has been lost due to an increase in a flow resistance against exhaust gas is regenerated by the turbocharger. Therefore, it is possible to reduce the amount of fuel consumption required to cause particulates trapped in the filter to desirably burn.

The exhaust emission control device of the present invention may further have the operating means to operate the exhaust gas flow resistance change means to reduce a resistance against exhaust gas when the filter is at a temperature higher than a first predetermined temperature. To ensure that the exhaust gas flow resistance change means operates to reduce a resistance against exhaust gas when the exhaust gas temperature is higher than the first predetermined temperature, when the hydrocarbon discharged from the hydrocarbon adsorbent effectively contributes to the combustion of particulates, the maximum adsorption amount of hydrocarbon is reduced. It is thus possible to further discharge a large amount of hydrocarbon. When the exhaust gas temperature is lower than the first predetermined temperature and the hydrocarbon discharged from the hydrocarbon adsorbent does not effectively contribute to the combustion of particulates, the maximum adsorption amount of hydrocarbon is increased to inhibit the discharge of hydrocarbon. It is thus possible to reserve a certain amount of hydrocarbon in preparation for the time when the hydrocarbon effectively contributes to the combustion of particulates. In this manner, it is possible to effectively use the unburnt fuel contained in exhaust gas for the combustion of particulates.

The exhaust emission control device of the present invention may further be modified such that the operating means operates the exhaust gas flow the resistance change means to reduce a flow resistance against exhaust gas when the exhaust gas temperature is higher than the first predetermined temperature at the time of engine deceleration. The operation of the exhaust gas flow resistance change means for reducing a flow resistance against exhaust gas, which is accompanied by fluctuations in engine outputs, is performed at the time of engine deceleration. It is thus possible to halt a deterioration in drivability and to cause particulates to desirably burn at the time of engine deceleration when exhaust gas contains a high concentration of oxygen.

The exhaust emission control device of the present invention may still further be provided with prohibition means for prohibiting the operating means from reducing the flow resistance of the exhaust gas flow resistance change means when the exhaust gas temperature is higher than a second predetermined temperature that is higher than the first predetermined temperature. When the exhaust gas temperature is higher than the second predetermined temperature and the particulates desirably burn, the maximum adsorption amount is reduced to prevent hydrocarbon from being further discharged. It is thus possible to effectively use the unburnt fuel contained in exhaust gas for the combustion of particulates and to prevent the filter from melting through excessive heating.

The object as well as features and advantages of the present invention will become apparent from or are described in the following description of the preferred embodiments with reference to the accompanying drawings, wherein:
Fig. 1 is a schematic view of an exhaust emission control device for an internal combustion engines according to a first embodiment of the present invention;
Fig. 2 is a graph showing a relationship between the maximum adsorption amount and the atmospheric pressure of a hydrocarbon adsorbent;
Fig. 3 is a graph showing a relationship between the particulate combustion amount and the filter temperature;
Fig. 4 is a flowchart for controlling a waste gate valve;
Fig. 5 is a time chart showing changes in atmospheric pressure of the hydrocarbon adsorbent during engine acceleration and engine deceleration; and
Fig. 6 is a schematic view of an exhaust emission control device for an internal combustion engines according to a second embodiment of the present invention.

Preferred embodiments of the present invention will now be described in detail with reference to the accompanying drawings.

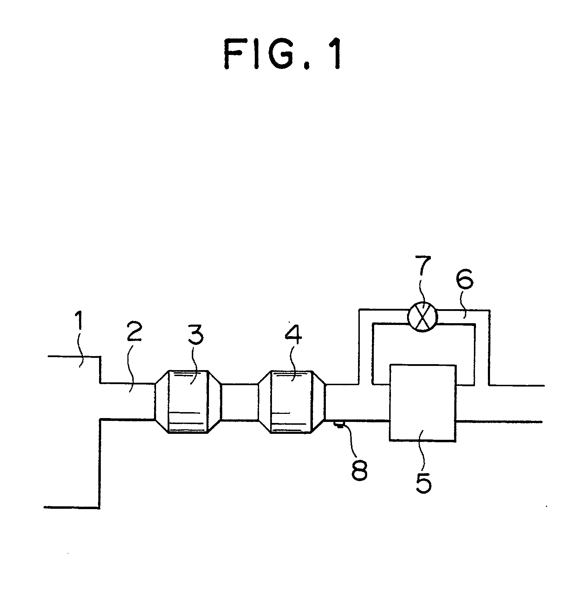

Fig. 1 schematically shows an exhaust emission control device for an internal combustion engine according to a first embodiment of the present invention. Referring to Fig. 1, reference numerals 1 and 2 denote a diesel engine body and an engine exhaust passage, respectively. The engine exhaust passage 2 is provided with a hydrocarbon trap 3. A filter 4 for trapping particulates is disposed downstream of the hydrocarbon trap 3 and a turbine 5 of a turbocharger is disposed downstream of the filter 4. The exhaust passage 2 is connected with a waste gate passage 6 for bypassing the turbine 5. Disposed inside the waste gate passage 6 is a waste gate valve 7 for controlling the amount of exhaust gas bypassing the turbine 5. A temperature sensor 8 detects an exhaust gas temperature immediately downstream of the filter 4.

The hydrocarbon trap 3 contains a hydrocarbon adsorbent that reliably adsorbs hydrocarbons such as mordenite, Y-zeolite, X-zeolite, ZSM-5 and the like. The filter 4 has, for example, a partition wall made of a porous substance, a metallic fiber nonwoven fabric or the like and is designed to trap particulates when exhaust gas radially flows through the partition wall. The filter 4 carries an oxidation catalyst.

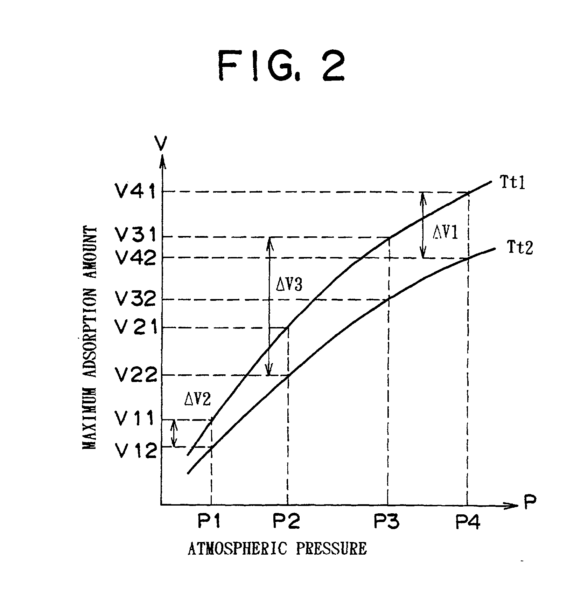

It is true that the aforementioned hydrocarbon adsorbent adsorbs hydrocarbon as an unburnt substance contained in exhaust gas, but there is a certain limit as to the amount of hydrocarbon to be adsorbed. The maximum adsorption amount of the adsorbent depends on temperature and atmospheric pressure thereof. Fig. 2 shows a relationship between the maximum adsorption amount V and the atmospheric pressure P of the hydrocarbon adsorbent separately for the case where the hydrocarbon adsorbent is at a first temperature Tt1 and for the case where the hydrocarbon adsorbent is at a second temperature Tt2 (Tt2>Tt1). As can be seen from the curves in Fig. 2, the lower the atmospheric pressure P of the hydrocarbon adsorbent becomes, the less the maximum adsorption amount V becomes. Furthermore, the higher the temperature of the hydrocarbon adsorbent becomes, the less the maximum adsorption amount V becomes.

In the case where the hydrocarbon adsorbent changes in temperature from the first temperature Tt1 to the second temperature Tt2, the amount of hydrocarbon discharged from the hydrocarbon adsorbent corresponds to a difference in maximum adsorption amount between those temperatures Tt1 and Tt2. For example, the curves in Fig. 2 reveal that the amount of hydrocarbon discharged is ΔV1(V41-V42) under a high atmospheric pressure of P4 and ΔV2(V11-V12) under a low atmospheric pressure of P1. The higher the atmospheric pressure becomes, the more hydrocarbon is discharged. In the present embodiment, the turbine 5 of the turbocharger is disposed downstream of the hydrocarbon trap 3 of the engine exhaust passage 2 and the waste gate valve 7 is normally closed. Thus, the turbine 5 constitutes a flow resistance against exhaust gas that allows a substantial increase in atmospheric pressure of the hydrocarbon adsorbent throughout the engine operation. For a certain change in temperature of the hydrocarbon adsorbent, such a flow resistance against exhaust gas brings about an increase in the amount of hydrocarbon discharged.

In the present embodiment as described hitherto, it is possible to discharge a comparatively large amount of hydrocarbon from the hydrocarbon adsorbent upon a change in temperature thereof, after the oxidation catalyst carried by the filter 4 has been activated due to a relatively high exhaust gas temperature (about 200°C). Accordingly, the oxidation catalyst carried by the filter 4 allows desirable combustion of the hydrocarbon thus discharged, and the particulates trapped in the filter burn due to the combustion heat generated at this time. In this manner, the filter can be regenerated without necessitating additional fuel.

If the oxidation catalyst is activated, the hydrocarbon discharged from the hydrocarbon adsorbent burns and the combustion heat generated at this time contributes to the combustion of particulates, whereby the regeneration of the filter is started. Thus, if a higher combustion heat is generated upon start of the regeneration of the filter by further discharging a large amount of hydrocarbon from the hydrocarbon adsorbent, it is possible to cause particulates to burn more desirably. For this purpose, it is considered to open the waste gate valve 7 and to thereby reduce a flow resistance against exhaust gas. Thus, the atmospheric pressure of the hydrocarbon adsorbent decreases, whereby it is possible to further discharge a large amount of hydrocarbon (e.g. ΔV3(V31-V22) in Fig. 2). The opening operation of the waste gate valve 7 results in a decrease in boost pressure of the turbocharger, and thus a decrease in engine outputs. Therefore, it is desirable that the waste gate valve 7 be opened at the time of engine deceleration. When the engine decelerates, fuel supply is temporarily suspended or at least the amount of fuel injection is significantly reduced. In this state, there is a large amount of oxygen contained in exhaust gas, which is quite advantageous in terms of the combustion of particulates.

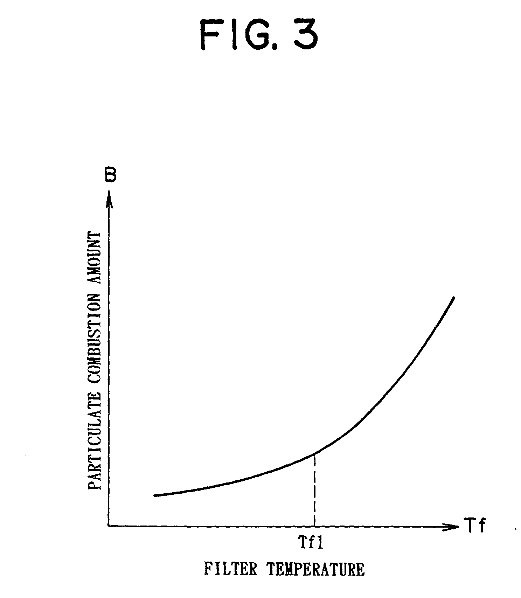

Fig. 3 is a graph showing a relationship between the particulate combustion amount B and the temperature Tf of the filter 4. As is apparent from this graph, when the filter temperature is higher than a predetermined temperature Tf1, the particulate combustion amount per unit of a rise in temperature substantially increases. The amount of unburnt fuel contained in exhaust gas is relatively small and the hydrocarbon adsorbent does not invariably adsorb a maximum amount of hydrocarbon. The unburnt fuel contained in the exhaust gas efficiently contributes to the combustion of particulates in the following manner. That is, when the filter temperature is lower than the predetermined temperature Tf1, the hydrocarbon adsorbent prevents hydrocarbon from being discharged therefrom, and when the filter temperature is higher than the predetermined temperature Tf1, the hydrocarbon adsorbent discharges a large amount of hydrocarbon.

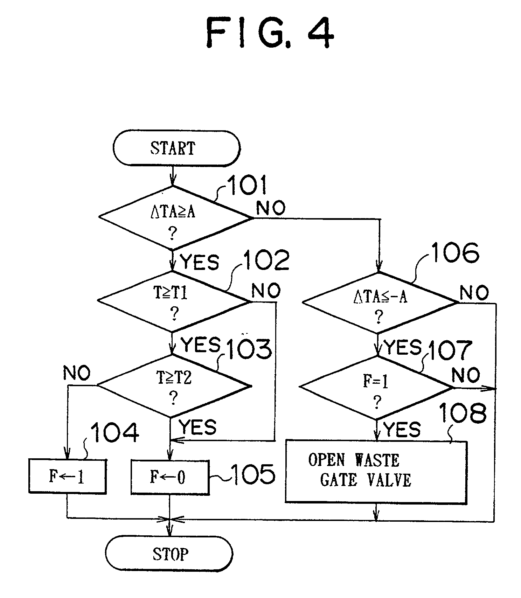

Fig. 4 is a flowchart of a waste gate valve control for performing such an operation. The routine of this flowchart is repeated at predetermined time intervals. First in step 101, it is determined whether or not the amount of change in accelerator pedal depression stroke ΔTA, which is detected by an accelerator pedal stroke sensor (not shown), is larger than a predetermined value A. If the determination in step 101 gives the affirmative result, the engine is in a state of acceleration and the operation proceeds to step 102.

In step 102, it is determined whether or not the exhaust gas temperature detected by the temperature sensor 8 is higher than a first temperature T1. The exhaust gas is at the first temperature T1 (e.g. about 400°C) immediately downstream of the filter 4, when the filter temperature assumes the predetermined temperature Tf1. If the determination in step 102 gives the negative result, the operation proceeds to step 105, where a flag F is set to 0 to terminate the operation. On the other hand, if the determination in step 102 gives the affirmative result, the operation proceeds to step 103, where it is determined whether or not the exhaust gas temperature T is higher than a second temperature T2. The exhaust gas is at the second temperature T2 (e.g. about 700°C) immediately downstream of the filter 4, when the filter 4 is at a sufficiently high temperature and the particulates are in a desirable state of combustion. If the determination in step 103 gives the affirmative result, the operation proceeds to step 105, where the flag F is set to 0 to terminate the operation. If the determination in step 103 gives the negative result, the operation proceeds to step 104, where the flag F is set to 1 to terminate the operation.

If the determination in step 101 gives the negative result after completion of engine acceleration, the operation proceeds to step 106, where it is determined whether or not the amount of change in accelerator pedal depression stroke ΔTA is smaller than a predetermined value (-A). If the determination in step 106 gives the negative result, the engine is in a steady state and the operation is terminated. On the other hand, if the determination in step 106 gives the affirmative result, the engine is in a state of deceleration and the operation proceeds to step 107.

In step 107, it is determined whether or not the flag-F is set to 1. If the determination in step 107 gives the negative result, the operation is terminated with the waste gate valve 7 remaining closed. However, if the flag F has been set to 1 at the time of engine acceleration, the operation proceeds to step 108, where the waste gate valve 7 is opened.

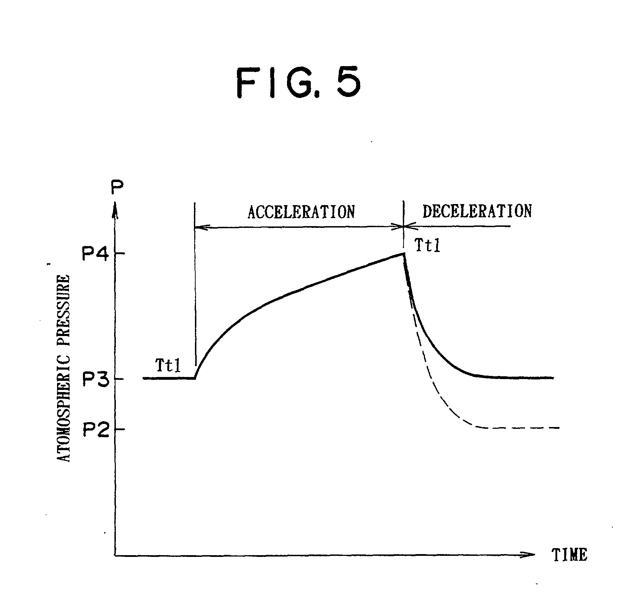

Fig. 5 is a time chart showing changes in the atmospheric pressure P of the hydrocarbon adsorbent caused by such a control operation of the waste gate valve. In this time chart, the engine that is in a predetermined steady state sequentially undergoes acceleration and deceleration and finally returns to the predetermined steady state. To make it easy to understand the specific features of the present invention, the temperatures and atmospheric pressures of the hydrocarbon adsorbent are determined as follows. The hydrocarbon adsorbent is at the first temperature Tt1 as shown in Fig. 2 prior to acceleration and it is heated to the second temperature Tt2 as shown in Fig. 2 after acceleration. Even after deceleration, the hydrocarbon adsorbent is maintained at the second temperature Tt2. The atmospheric pressure of the hydrocarbon adsorbent in the predetermined steady state with the waste gate valve 7 being closed assumes the third atmospheric pressure P3 as shown in Fig. 2. The atmospheric pressure of the hydrocarbon adsorbent with the waste gate valve 7 being opened assumes the second atmospheric pressure P2 as shown in Fig. 2.

During engine acceleration, the amount of exhaust gas increases. Upon termination of engine acceleration, the pressure upstream of the turbine 5 of the turbocharger, i.e. the atmospheric pressure P of the hydrocarbon adsorbent increases to the fourth atmospheric pressure P4, which is higher than the third atmospheric pressure P3. Unless the exhaust gas temperature immediately downstream of the filter 4 exceeds the first temperature T1 during engine acceleration, the flag F is set to 0, so that the waste gate valve 7 remains closed at the time of engine deceleration. Thus, after engine deceleration, the atmospheric pressure P decreases to the third atmospheric pressure P3, as is indicated by a solid line in Fig. 5. Therefore, the maximum adsorption amount of the hydrocarbon adsorbent assumes V32 as indicated in Fig. 2. In this state, even if the filter 4 is supplied with hydrocarbon, the hydrocarbon does not efficiently contribute to the combustion of particulates. Thus, the hydrocarbon adsorbent is designed to adsorb a relatively large amount of hydrocarbon, i.e. no less than the maximum adsorption amount V32 of hydrocarbon. If the amount of hydrocarbon adsorbed by the hydrocarbon adsorbent is still below the maximum adsorption amount V32, it is possible to desirably adsorb hydrocarbon during a steady-state operation that is subsequently performed.

On the other hand, if the exhaust gas temperature immediately downstream of the filter 4 exceeds the first temperature Tt1 during engine acceleration, the flag F is set to 1 and the waste gate valve 7 is opened at the time of engine deceleration. Thus, at the time of engine deceleration, as is indicated by a broken line in Fig. 5, the atmospheric pressure P decreases to the second atmospheric pressure P2 and the maximum adsorption amount of the hydrocarbon adsorbent decreases to V22 as is shown in Fig. 2. If the filter 4 is supplied with hydrocarbon at this time, the hydrocarbon efficiently contributes to the combustion of particulates. Hence, the hydrocarbon adsorbent adsorbs a relatively small amount of hydrocarbon, i.e. no more than the maximum adsorption amount V22 of hydrocarbon. The hydrocarbon adsorbent discharges a large amount of hydrocarbon that has so far been adsorbed. In this manner, a relatively small amount of unburnt fuel contained in exhaust gas can be effectively used for the combustion of particulates, so that the filter 4 can be regenerated without necessitating additional fuel.

If the exhaust gas temperature immediately downstream of the filter 4 exceeds the second temperature Tt2 at the time of engine acceleration, the combustion of particulates is spontaneously started because of a high temperature of exhaust gas or because of a combustion heat of the hydrocarbon discharged due to a rise in temperature of the hydrocarbon adsorbent at this time, so that there is no need to further discharge hydrocarbon. Thus, at the time of engine deceleration, the waste gate valve 7 remains closed and the hydrocarbon adsorbent adsorbs a relatively large amount of hydrocarbon, i.e. the maximum adsorption amount V32 of hydrocarbon. Hence, the wasteful use of the hydrocarbon adsorbed by the hydrocarbon adsorbent is avoided and the filter 4 is prevented from melting through excessive heating.

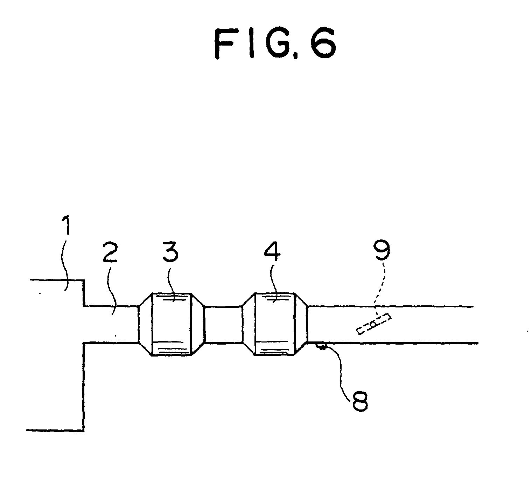

Fig. 6 schematically shows an exhaust emission control device for an internal combustion engine according to a second embodiment of the present invention. This exhaust emission control device is different from that of the first embodiment in that an exhaust throttle valve 9 is disposed downstream of the filter 4 instead of the turbine of the turbocharger and the waste gate passage. Even in a fully closed state, the exhaust throttle valve 9 allows passage of a certain amount of exhaust gas. By controlling the exhaust throttle valve 9 substantially in the same manner as the waste gate valve 7, it is possible-to achieve substantially the same effect as in the first embodiment. The turbine of the turbocharger also recovers part of the thermal energy of exhaust gas, so that the exhaust gas temperature downstream of the turbine decreases, which is disadvantageous in terms of the combustion of particulates. For this reason, the turbine cannot be disposed upstream of the filter 4. However, the exhaust throttle valve 9 does not exhibit such a disadvantage and therefore can be disposed at any location downstream of the hydrocarbon trap 3. It is not absolutely required that the exhaust throttle valve 9 be disposed downstream of the filter 4.

Although the aforementioned two embodiments relate to a diesel engine, the present invention can also be applied to a gasoline engine, whose exhaust gas also contains particulates. Furthermore, in the case where the amount of unburnt fuel contained in exhaust gas is comparatively small and the hydrocarbon discharged from the hydrocarbon adsorbent cannot sufficiently contribute to the combustion of particulates, it is considered to directly or indirectly supply the filter with fuel. Also in this case, the aforementioned unburnt fuel partially contributes to the combustion of particulates, whereby it is possible to significantly reduce the amount of additional fuel required.

While the present invention has been described with reference to what is presently considered to be preferred embodiments thereof, it is to be understood that the invention is not limited to the disclosed embodiments or constructions. On the contrary, the invention is intended to cover various modifications and equivalent arrangements falling within the scope of the appended claims.

## Claims

1. An exhaust emission control device for an internal combustion engine comprising a filter (4) disposed in an engine exhaust passage (2) to trap particulates, a hydrocarbon adsorbent (3) disposed upstream of the filter (4) in the engine exhaust passage (2), the hydrocarbon adsorbent (3) adsorbing hydrocarbon exhausted from the internal combustion engine when a temperature of the hydrocarbon adsorbent (3) is low and discharging the adsorbed hydrocarbon when the temperature of the hydrocarbon adsorbent (3) goes up,
**characterized by**
exhaust gas flow resistance change means (5, 6, 7; 9) disposed downstream of the hydrocarbon adsorbent (3) in the engine exhaust passage (2) which increases the exhaust gas flow resistance in the engine exhaust passage (2) before the filter (4) should be regenerated and reduces the exhaust gas flow resistance during filter regeneration, wherein the filter (4) is regenerated by the hydrocarbon discharged from the hydrocarbon adsorbent (3) when the temperature of the hydrocarbon adsorbent (3) is increased.

2. An exhaust emission control device according to claim 1, **characterized in that** the operating means operates the exhaust gas flow resistance change means (5, 6, 7; 9) to increase the flow resistance or to maintain the increased flow resistance at the time of engine acceleration and further operates to maintain the increased flow resistance of the exhaust gas flow resistance change means (5, 6, 7; 9) at the time of engine deceleration in dependency on predetermined operating conditions.

3. An exhaust emission control device according to claim 1 or 2, **characterized in that** the exhaust gas flow resistance change means comprises a turbine (5) of a turbocharger disposed downstream of the filter (4) in the engine exhaust passage (2), a bypass passage (6) for bypassing the turbine (5) , and a control valve (7) disposed in the bypass passage (6) and that the operating means closes the control valve (7) to increase the exhaust gas flow resistance.

4. An exhaust emission control device according to claim 1, 2 or 3, **characterized in that** the operating means operates the exhaust gas flow resistance change means (5, 6, 7; 9) to reduce the exhaust gas flow resistance in the exhaust gas passage (2) when the filter (4) is at a temperature higher than a first predetermined temperature.

5. An exhaust gas emission control device according to claim 4, **characterized in that** the operating means operates the exhaust gas flow resistance change means (5, 6, 7; 9) to reduce the exhaust gas flow resistance in the exhaust gas passage (2) when the exhaust gas temperature (T) is higher than the first predetermined temperature (T1) at the time of engine deceleration.

6. An exhaust gas emission control device according to claim 4 or 5, **characterized by** prohibition means for prohibiting the operating means from reducing the exhaust gas flow resistance by the exhaust gas flow resistance change means (5, 6, 7; 9) when the exhaust gas temperature (T) is higher than a second predetermined temperature (T2) that is higher than the first predetermined temperature (T1).

7. A method for controlling an exhaust emission of an internal combustion engine comprising the steps of:
trapping particulates by a filter (4) disposed in an engine exhaust passage (2);
adsorbing hydrocarbons by a hydrocarbon adsorbent (3) disposed upstream of the filter (4) in the engine exhaust passage (2), the hydrocarbon adsorbent (3) adsorbing hydrocarbon exhausted from the internal combustion engine when a temperature of the hydrocarbon adsorbent (3) is low and discharging the adsorbed hydrocarbon when the temperature of the hydrocarbon adsorbent (3) goes up;
**characterized by the step of**
increasing the exhaust gas flow resistance in the engine exhaust passage (2) by exhaust gas flow resistance change means (5, 6, 7; 9) disposed downstream of the hydrocarbon adsorbent (3) in the engine exhaust passage (2) before the filter (4) should be regenerated and reducing the exhaust gas flow resistance during filter regeneration, the filter being regenerated by the hydrocarbon discharged from the hydrocarbon adsorbent (3) when the temperature of the hydrocarbon adsorbent (3) is increased.

## Patentansprüche

1. Abgasemissionssteuerung für eine Brennkraftmaschine mit einem Filter (4), der in einem Motorabgaskanal (2) angeordnet ist, um Schwebstoffe aufzufangen, einem Kohlenwasserstoffadsorbens (3), das stromaufwärts des Filters (4) in dem Motorabgaskanal (2) angeordnet ist, wobei das Kohlenwasserstoffadsorbens (3) Kohlenwasserstoff adsorbiert, der von der Brennkraftmaschine abgegebenen wird, wenn eine Temperatur des Kohlenwasserstoffadsorbens niedrig ist, und den adsorbierten Kohlenwasserstoff abgibt, wenn die Temperatur des Kohlenwasserstoffadsorbens (3) ansteigt,
**gekennzeichnet durch**
eine stromabwärts des Kohlenwasserstoffadsorbens (3) in dem Motorabgaskanal (2) angeordnete Abgasströmungswiderstandsänderungseinrichtung (5, 6, 7; 9), die den Abgasströmungswiderstand in dem Motorabgaskanal (2) erhöht, bevor der Filter (4) regeneriert werden sollte, und die den Abgasströmungswiderstand während der Filterregeneration verringert, wobei der Filter (4) **durch** den Kohlenwasserstoff regeneriert wird, der von dem Kohlenwasserstoffadsorbens (3) abgegeben wird, wenn die Temperatur des Kohlenwasserstoffadsorbens (3) erhöht ist.

2. Abgasemissionssteuerung nach Patentanspruch 1, **dadurch gekennzeichnet, dass** die Betriebseinrichtung die Abgasströmungswiderstandsänderungseinrichtung (5, 6, 7; 9) betreibt, um den Strömungswiderstand zu erhöhen oder den erhöhten Strömungswiderstand zu einem Zeitpunkt der Motorbeschleunigung zu erhalten und des weiteren betreibt, um den erhöhten Strömungswiderstand der Abgasströmungswiderstandsänderungseinrichtung (5, 6, 7; 9) zu dem Zeitpunkt einer Motorverzögerung in Abhängigkeit von vorgegebenen Betriebsbedingungen zu erhalten.

3. Abgasemissionssteuerung nach Patentanspruch 1 oder 2, **dadurch gekennzeichnet, dass** die Abgasströmungswiderstandsänderungseinrichtung eine Turbine (5) eines Turboladers, die stromabwärts des Filters (4) in dem Motorabgaskanal (2) angeordnet ist, einen Bypasskanal (6) zum Umgehen der Turbine (5) und ein in dem Bypasskanal (6) angeordnetes Steuerventil (7) aufweist und dass die Betriebseinrichtung das Steuerventil (7) schließt, um den Abgasströmungswiderstand zu erhöhen.

4. Abgasemissionssteuerung nach Patentanspruch 1, 2 oder 3, **dadurch gekennzeichnet, dass** die Betriebseinrichtung die Abgasströmungswiderstandsänderungseinrichtung (5, 6, 7; 9) betreibt, um den Abgasströmungswiderstand in dem Abgaskanal (2) zu verringern, wenn der Filter (4) eine höhere Temperatur als eine erste vorgegebene Temperatur hat.

5. Abgasemissionssteuerung nach Patentanspruch 4, **dadurch gekennzeichnet, dass** die Betriebseinrichtung die Abgasströmungswiderstandsänderungseinrichtung (5, 6, 7; 9) betreibt, um den Abgasströmungswiderstand in dem Abgaskanal (2) zu verringern, wenn zu einem Zeitpunkt der Motorverzögerung die Abgastemperatur (T) höher als die erste vorgegebene Temperatur (T1) ist.

6. Abgasemissionssteuerung nach Patentanspruch 4 oder 5, **gekennzeichnet durch** eine Verhinderungseinrichtung zum Verhindern, dass die Betriebseinrichtung den Abgasströmungswiderstands **durch** die Abgasströmungswiderstandsänderungseinrichtung (5, 6, 7; 9) verringert, wenn die Abgastemperatur (T) höher ist als eine zweite vorgegebene Temperatur (T2), die höher ist als die erste vorgegebene Temperatur (T1).

7. Verfahren zum Steuern einer Abgasemission einer Verbrennungskraftmaschine mit den Schritten:
Auffangen von Schwebstoffen durch einen Filter (4), der in einem Motorabgaskanal (2) angeordnet ist;
Adsorbieren von Kohlenwasserstoffen durch ein Kohlenwasserstoffadsorbens (3), das stromaufwärts des Filters (4) in dem Motorabgaskanal (2) angeordnet ist, wobei das Kohlenwasserstoffadsorbens (3) Kohlenwasserstoff adsorbiert, der von der Verbrennungskraftmaschine abgegeben wird, wenn eine Temperatur des Kohlenwasserstoffadsorbens (3) niedrig ist, und das den adsorbierten Kohlenwasserstoff abgibt, wenn die Temperatur des Kohlenwasserstoffadsorbens (3) ansteigt;
**gekennzeichnet durch**
Erhöhen des Abgasströmungswiderstandes in dem Motorabgaskanal (2) **durch** eine Abgasströmungswiderstandsänderungseinrichtung (5, 6, 7; 9), die stromabwärts des Kohlenwasserstoffadsorbens (3) in dem Motorabgaskanal (2) angeordnet ist, bevor der Filter (4) regeneriert werden sollte, und Verringern des Abgasströmungswiderstandes während der Filterregeneration, wobei der Filter **durch** den Kohlenwasserstoff regeneriert wird, der von dem Kohlenwasserstoffadsorbens (3) abgegeben wird, wenn die Temperatur des Kohlenwasserstoffadsorbens (3) erhöht ist.

## Revendications

1. Un dispositif de réglage des émissions d'échappement pour un moteur à combustion interne comprenant un filtre (4) placé dans un passage d'échappement du moteur (2) afin de piéger des particules, un adsorbant d'hydrocarbures (3) placé à l'amont du filtre (4) dans le passage d'échappement du moteur (2), l'adsorbant d'hydrocarbures (3) absorbant les hydrocarbures émis du moteur à combustion interne lorsque la température de l'adsorbant d'hydrocarbures (3) est basse et libérant les hydrocarbures adsorbés lorsque la température de l'adsorbant d'hydrocarbures (3) s'élève,
**caractérisé par**
un moyen de modification de la résistance à l'écoulement des gaz d'échappement (5, 6, 7 ; 9) placé à l'aval de l'adsorbant d'hydrocarbures (3) dans le passage d'échappement du moteur (2) qui augmente la résistance à l'écoulement des gaz d'échappement dans le passage d'échappement du moteur (2) avant que le filtre (4) ne soit normalement régénéré et diminue la résistance à l'écoulement des gaz d'échappement pendant la régénération du filtre, dans lequel le filtre (4) est régénéré par l'hydrocarbure libéré de l'adsorbant d'hydrocarbures (3) lorsque la température de l'adsorbant d'hydrocarbures (3) est augmentée.

2. Un dispositif de réglage des émissions d'échappement selon la revendication 1, **caractérisé en ce que** le moyen d'actionnement actionne le moyen de modification de la résistance à l'écoulement des gaz d'échappement (5, 6, 7 ; 9) afin d'augmenter la résistance à l'écoulement, ou de maintenir la résistance à l'écoulement augmentée, au moment de l'accélération du moteur et fonctionne en outre pour maintenir la résistance à l'écoulement augmentée du moyen de modification de la résistance à l'écoulement des gaz d'échappement (5, 6, 7 ; 9) au moment de la décélération du moteur en fonction de conditions de fonctionnement prédéterminées.

3. Un dispositif de réglage des émissions d'échappement selon la revendication 1 ou 2, **caractérisé en ce que** le moyen de modification de la résistance à l'écoulement des gaz d'échappement comprend une turbine (5) d'un turbocompresseur placé à l'aval du filtre (4) dans le passage d'échappement de moteur (2), un passage de contournement (6) pour contourner la turbine (5), et une vanne de régulation (7) placée dans le passage de contournement (6) et **en ce que** le moyen d'actionnement ferme la vanne de régulation (7) pour augmenter la résistance à l'écoulement des gaz d'échappement.

4. Un dispositif de réglage des émissions d'échappement selon la revendication 1, 2 ou 3, **caractérisé en ce que** le moyen d'actionnement actionne le moyen de modification de la résistance à l'écoulement des gaz d'échappement (5, 6, 7 ; 9) afin de diminuer la résistance à l'écoulement des gaz d'échappement dans le passage de gaz d'échappement (2) lorsque le filtre (4) est à une température supérieure à une première température prédéterminée.

5. Un dispositif de réglage des émissions de gaz d'échappement selon la revendication 4, **caractérisé en ce que** le moyen d'actionnement actionne le moyen de modification de la résistance à l'écoulement des gaz d'échappement (5, 6, 7 ; 9) afin de diminuer la résistance à l'écoulement des gaz d'échappement dans le passage de gaz d'échappement (2) lorsque la température des gaz d'échappement (T) est supérieure à la première température prédéterminée (T1) au moment de la décélération du moteur.

6. Un dispositif de réglage des émissions de gaz d'échappement selon la revendication 4 ou 5, **caractérisé par** le moyen d'interdiction servant à empêcher que le moyen d'actionnement ne diminue la résistance à l'écoulement des gaz d'échappement à l'aide du moyen de modification de la résistance à l'écoulement des gaz d'échappement (5, 6, 7 ; 9) lorsque la température des gaz d'échappement (T) est supérieure à une deuxième température prédéterminée (T2) qui est supérieure à la première température prédéterminée (T1).

7. Un procédé pour régler les émissions d'échappement d'un moteur à combustion interne comprenant les étapes de :
piégeage de particules par un filtre (4) placé dans un passage d'échappement du moteur (2) ;
adsorption d'hydrocarbures par un adsorbant d'hydrocarbures (3) placé à l'amont du filtre (4) dans le passage d'échappement du moteur (2), l'adsorbant d'hydrocarbures (3) absorbant les hydrocarbures émis du moteur à combustion interne lorsque la température de l'adsorbant d'hydrocarbures (3) est basse et libérant les hydrocarbures adsorbés lorsque la température de l'adsorbant d'hydrocarbures (3) s'élève,
**caractérisé par l'étape de :**
augmentation de la résistance à l'écoulement de gaz d'échappement dans le passage d'échappement du moteur (2) par un moyen de modification de la résistance à l'écoulement des gaz d'échappement (5, 6, 7 ; 9) placé à l'aval de l'adsorbant d'hydrocarbures (3) dans le passage d'échappement du moteur (2) avant que le filtre (4) ne soit normalement régénéré et diminution de la résistance à l'écoulement des gaz d'échappement pendant la régénération du filtre, le filtre étant régénéré par l'hydrocarbure libéré de l'adsorbant d'hydrocarbures (3) lorsque la température de l'adsorbant d'hydrocarbures (3) est augmentée.
